# EUROPEAN PATENT APPLICATION

(11) **EP 4 303 539 A1**
(43) Date of publication of application: **10.01.2024**
(21) Application number: 23182227.1
(22) Date of filing: 28.06.2023
(51) Int. Cl.: G01D 3/08

(54) **SENSOR DATA GENERATION METHOD, APPARATUS AND SYSTEM AND STORAGE MEDIUM**

(30) Priority: 08.07.2022 CN 202210853447
(71) Applicant: Beijing Tusen Zhitu Technology Co., Ltd., Beijing 100016 (CN)
(72) Inventor: WANG, Yuyong, Beijing, 10016 (CN); GUO, Shengjie, Beijing, 10016 (CN); WANG, Ming, Beijing, 10016 (CN); JI, Pingyuan, Beijing, 10016 (CN)
(74) Representative: Murgitroyd & Company

(57) **Abstract**

The present application discloses a sensor data generation method, apparatus and system and a storage medium. The method comprises: receiving information about a fault type of a sensor; generating an instruction corresponding to the fault type of the target sensor, the instruction comprising a fault parameter, and the fault parameter comprising an injection mode of the fault type and a fault occurrence probability; and obtaining target sensor data having the fault type on the basis of the injection mode of the fault type and the fault occurrence probability. In the present application, an injection mechanism of the fault types of the target sensors is increased, and the target sensor data corresponding to different scenes are rendered on the basis of the fault types, thus reducing occupation of real test resources.

## Description

The present disclosure claims priority to Chinese patent application No. 202210853447.8, titled "SENSOR DATA GENERATION METHOD, APPARATUS AND SYSTEM AND STORAGE MEDIUM", filed on July 08, 2022.

### TECHNICAL FIELD

The present application relates to the technical field of intelligent driving, and in particular to a sensor data generation method, apparatus and system and a storage medium.

### BACKGROUND

In a testing process of an autonomous driving system, data acquisition needs to be performed by means of sensors arranged on a vehicle, and positioning, sensing, decision making or control logic operation is implemented on the basis of the acquired sensor data.

Currently, for the acquisition of sensor data, an autonomous vehicle is mainly adopted for performing a real test in an actual physical scene to acquire real sensor data, so that an autonomous driving system may output information such as an accurate decision on the basis of real sensor data. However, the mode consumes human and material resources, has lower efficiency in a test, is easy to bring potential safety hazards especially when the sensor data are acquired in a special scene (such as rainstorm, thunder and lightning and severe weather), and has lower efficiency in effective data acquisition.

### SUMMARY

The present application mainly aims to provide a sensor data generation method, apparatus and system so as to solve the problems of time and labor consumption in the related art.

In order to achieve the above objective, in a first aspect, the present application provides a sensor data generation method, comprising:
receiving information about a fault type of a sensor sent by a demand end;
generating an instruction corresponding to the fault type of the sensor, the instruction comprising a fault parameter, and the fault parameter comprising an injection mode of the fault type and a fault occurrence probability; and obtaining target sensor data having the fault type on the basis of the injection mode of the fault type and a fault occurrence probability.

In a second aspect, an embodiment of the present invention provides
a sensor data generation apparatus, comprising:
a receiving module, configured for receiving information about a fault type of sensor sent by a demand end;
an instruction generation module, configured for generating an instruction corresponding to the fault type of the sensor, the instruction comprising a fault parameter, and the fault parameter comprising an injection mode of the fault type and a fault occurrence probability; and
a sensor data generation module, configured for obtaining target sensor data having the fault type on the basis of the i injection mode of the fault type and a fault occurrence probability.

In a third aspect, an embodiment of the present invention provides a sensor data generation system, comprising:
a computing device, configured for receiving information about a fault type of a t sensor sent by a demand end and generating an instruction corresponding to the fault type of the sensor, the instruction comprising a fault parameter, and the fault parameter comprising an injection mode of the fault type and a fault occurrence probability; and
a simulation device, configured for receiving the instruction sent by the computing device and generating target sensor data having the fault type on the basis of the injection mode of the fault type and a fault occurrence probability.

In a fourth aspect, an embodiment of the present invention provides a computing apparatus, which comprises a storage, a processor, and a computer program stored in the storage and executable on the processor, wherein the processor, when executing the computer program, implements the steps of the sensor data generation method according to any embodiment described above.

In a fifth aspect, an embodiment of the present invention provides a computer-readable storage medium having a computer program stored therein, and the computer program, when executed by a processor, causes the computing apparatus to implement the steps of the sensor data generation method according to any embodiment described above.

According to the technical solution of the present invention, an injection mechanism of the fault types of the target sensors is increased, and the target sensor data corresponding to different scenes are rendered on the basis of the fault types. The target sensor data can be rendered in an off-line environment, and also various scenes can be directly rendered in an office, including the target sensor data in special scenes, thus reducing occupation of real test resources.

Moreover, the present solution further provides a more real sensor model (namely a virtual sensor model), and performs timing modeling on different sensors, to fully guarantee the authenticity of the model, so that the operation of the intelligent driving system in a simulation environment is indistinguishable from that in the real world. In addition, according to the present solution, the obtained target sensor data are reversely solved to obtain the most original sensor data which are sent to an autonomous driving software system (or referred to as a downstream server), and sensor nodes in the system analyze the sensor data and then access algorithm modules such as sensing, so as to guarantee the authenticity and consistency of computing power use in the simulation environment and the real environment.

### BRIEF DESCRIPTION OF THE DRAWINGS

The accompanying drawings, which form a part of the present application, are provided to facilitate a further understanding of the present application, so that other features, objectives, and advantages of the present application will be more apparent. The drawings and the description of the exemplary embodiments of the present application are provided to illustrate the present application and do not constitute undue limitations on the present application. In the drawings:
FIG. 1 is a schematic diagram of an application scene of a sensor data generation method provided in an embodiment of the present invention;
FIG. 2 is a flowchart for implementing the sensor data generation method provided in an embodiment of the present invention;
FIG. 3 is a schematic diagram of a "mirror image" phenomenon of a high-reflection scene observed by a LiDAR provided in an embodiment of the present invention;
FIG. 4 is a schematic structural diagram of a sensor data generation system provided in an embodiment of the present invention;
FIG. 5 is a schematic diagram of exposure or scanning time corresponding to sensor data provided in an embodiment of the present invention;
FIG. 6 is a schematic structural diagram of the sensor data generation system provided in another embodiment of the present invention;
FIG. 7 is a schematic structural diagram of a sensor data generation apparatus provided in an embodiment of the present invention;
FIG. 8 is a flowchart of the sensor data generation method provided in another embodiment of the present invention;
FIG. 9 is a schematic structural diagram of the sensor data generation system provided in another embodiment of the present invention; and
FIG. 10 is a schematic diagram of a computing apparatus provided in an embodiment of the present invention.

### DETAILED DESCRIPTION

In order to make the objectives, technical solutions and advantages of the present invention more clearly understood, the technical solutions in the embodiments of the present invention will be clearly and completely described below with reference to the drawings in the embodiments of the present invention. Obviously, the described embodiments are only a part of the embodiments of the present invention, rather than all the embodiments. All other embodiments obtained by one of ordinary skilled in the art without making any creative effort based on the embodiments of the present invention shall fall within the protection scope of the present invention.

The terms "first", "second", "third", "fourth", etc. (if present) in the specification and claims of the present invention and the above drawings are used to distinguish similar objects, and do not have to be used to describe a specific order or sequence. It should be understood that the data used in this manner are interchangeable under appropriate circumstances so that the embodiments of the present invention described herein can be implemented in other manners in addition to those illustrated or described herein.

It should be understood that, in the various embodiments of the present invention, the sequence numbers of the processes do not mean the execution sequence, and the execution sequence of the processes should be determined by the functions and the internal logic, and should not constitute any limitation to the implementation process of the embodiments of the present invention.

It should be understood that, in the present invention, the terms "comprise" and "have" and any variations thereof are intended to cover non-exclusive inclusion. For example, a process, a method, a system, a product or a device comprising a series of steps or units is not necessarily limited to the explicitly listed steps or units, but may comprise other steps or units that are not explicitly listed or are inherent in the process, the method, the system, the product or the device.

It should be understood that, in the present invention, "a plurality of" means two or more. "And/or" is merely an associative relationship describing associated objects, and refers to that there may be three relationships, for example, A and/or B, may refer to that: A is present alone, A and B are present simultaneously, and B is present alone. The character "/" generally indicates an "or" relationship between the associated objects. "Comprise A, B and C" and "comprise A, B, C" means that all of A, B and C are comprised; "comprise A, B or C" means that one of A, B and C are comprised; "comprise A, B and/or C" means that any 1 or any 2 or 3 of A, B and C are comprised.

It should be understood that, in the present invention, "B corresponding to A", "B that corresponds to A", "A corresponds to B", or "B corresponds to A" means that B is associated with A, and B can be determined from A. "B can be determined from A" does not mean that B is determined from A alone, and B can also be determined from A and/or other information. The matching of A and B means that the similarity of A and B is greater than or equal to a preset threshold.

As used herein, "if" may be interpreted as "at..." or "when..." or "in response to determining" or "in response to detecting", depending on the context.

The technical solutions of the present invention will be described in detail with reference to specific embodiments. The following specific embodiments can be combined with each other, and details of the same or similar concepts or processes may not be repeated in some embodiments.

In order to make the objectives, technical solutions and advantages of the present application clearer, the detailed description will be given below with reference to the accompanying drawings.

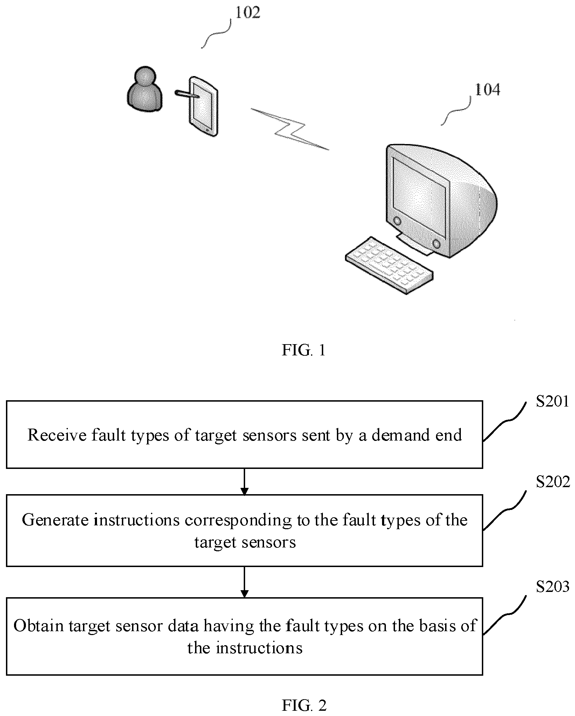

The sensor data generation method provided in the present application can be applied to the application environment shown in FIG. 1. A demand end 102 is in communication with a computing device 104. The computing device 104 receives fault types of target sensors sent by the demand end 102, then generates instructions corresponding to the fault types of the target sensors, and obtains target sensor data having the fault types on the basis of the instructions. The demand end 102 and the computing device 104 may be a same device, the demand end 102 may also be in communication with the computing device 104 via any communication manner, such as a wireless network. The demand end 102 may be any apparatus or device having a function of configuring fault types, and may be a client such as a user computer, or may also be a cloud server, and the demand end 102 may be one or more; the computing device 104 may be implemented as a stand-alone computing device or as a computing cluster of a plurality of computing devices.

In some embodiments, the computing device 104 may also be communicatively connected with a simulation device 106. The demand end 102 may be a first computing device, the computing device 104 may be a second computing device, the simulation device may be a third computing device. The simulation device is configured with a processor and a storage, and the simulation device may display a simulation scene and various static entities and/or dynamic entities in the simulation scene. The simulation scene comprises static information required by simulation, the static information comprises a simulation map, weather environment and the like, and the simulation map may adopt a high-precision map. The information displayed in the simulation map includes, but is not limited to, road signs, road attributes, lane lines, speed limit information, slope information, road material, and road patency. The road attributes include, but are not limited to, highways, urban roads, ramps, T-junctions, crossroads, roundabouts, tunnels, and the like, and the speed limit information includes the highest speed, the lowest speed, and the like. The slope information includes a slope angle, a slope length, and the like. The road material includes a cement road, an asphalt road, a sandy road and the like. The road patency includes whether water accumulation and potholes exist, and the like. In addition, the infrastructure on the roads is also displayed in the simulated map, including, but not limited to, traffic lights, road posts, traffic cones, barricades, and the like. A virtual vehicle to be tested and environmental vehicles around the virtual vehicle run in the simulation scene, and the virtual vehicle carries out path planning and decision control according to the environmental vehicles and each road infrastructure.

Furthermore, the computing device may send configuration items for each sensor to the simulation device in advance, the configuration items comprising the location and angle of the sensors relative to the virtual vehicle. After the simulation device receives the configuration items of the sensors, a corresponding sensor can be virtualized/simulated in a corresponding location of the virtual vehicle, and the surrounding environment data are rendered according to the sensor model. The corresponding sensor in the simulation device can be called a virtual sensor, the virtual sensor has same parameter with a target sensor (i.e., a physical sensor) and has same pose with the target sensor and can represent the target sensor. The parameter includes, but is not limited, internal parameter and external parameter. It should be understood that a plurality of sensors may be virtualized at different locations and angles on the virtual vehicle, the plurality of sensors can be displayed on the virtual vehicle by any symbols such as a point, a circle or a bounding box. On the other hand, the plurality of sensors need not be present on the virtual vehicle. As long as the relative location and the relative angle of the virtual sensor to the virtual vehicle are known, the location and the angle at which each virtual sensor should be present can be determined, and then the surrounding environmental data are rendered on the basis of the location and the angle of the sensor.

In some embodiments, the computing device 104 may also be communicatively connected with a storage device 108, also referred to as a data storage device (e.g., a database), in which road test data acquired by vehicles actually traveling on the roads are stored. In addition, the data storage device may further store scene information recorded in advance when each type of fault occurs during the road test, the scene information including, but not limited to, the speed of the vehicle, the pose of the vehicle, the distribution of the environmental entities, the speed and pose of each environmental entity, weather, map, and the like.

In one embodiment, as shown in FIG. 2, a sensor data generation method is provided. The embodiment is illustrated by applying the method to the computing device 104 in FIG. 1, and the method comprises the following steps:
Step S201: receiving information about a fault type of a target sensor sent by a demand end. In other word, receiving a request having a fault type of a target sensor sent by a demand end. Further, an identifier of the target sensor is also received from the demand end. The identifier indicates a type and a serial number of the target sensor, such as a medium range Lidar #1, a long focus camera #2. The type of a camera sensor includes, but is not limited to, a short focus camera, a long focus camera, a fisheye camera. The type of a LiDAR sensor includes, but is not limited to, a short range Lidar, a medium range Lidar, and a long range Lidar. The user can determine configuration item of a test in a configuration page, the configuration page provides various menu bars such as a drop-down box, an inputting box, and option box for the user to generate a request comprising the identifier of the target sensor, the fault type of a fault. Further, the user can also determine the required parameter values of the fault, such a time of duration of the fault (such as power down of a sensor).

In the step, the target sensor comprises at least one of an image acquisition apparatus, a point cloud acquisition apparatus or an integrated navigation device, wherein the image acquisition apparatus may be a vehicle-mounted camera, etc., the point cloud acquisition apparatus includes, but is not limited to, a LiDAR and a millimeter wave radar, and the integrated navigation device may comprise a global navigation satellite system (GNSS) sensor and an inertial measurement unit (IMU). It should be noted that the image acquisition apparatus, the point cloud acquisition apparatus and the integrated navigation device are not limited to the specific examples described above. In addition, the target sensor may further include other sensors, such as a wheel speed meter, a radar unit, an acoustic sensor, an oxygen monitor, a fuel gauge sensor, an engine oil pressure sensor, etc., each of which may have some corresponding fault types, and the present disclosure may set parameter items required to generate each fault type, i.e., may restore the fault type.

The fault type comprise at least one of a first fault type or a second fault type, wherein the first fault type comprises at least one of a data quality fault, a sensor location fault or a sensor hardware fault, wherein the data quality fault refers to abnormal data existing in the received data, the data are determined according to the sensor type, when the sensor is a vehicle-mounted camera, the data are image data, and at the moment, the data quality fault may be an image blurring phenomenon caused by partial image data loss. The sensor location fault means that the target location parameter of the sensor is greatly different from the preset location parameter or exceeds a preset threshold, and comprises internal parameter change and external parameter change of the sensor. The sensor location fault may be that the difference between the binocular pitch angles is large, that is, the difference between the pitch angles of a binocular module becomes large due to the repacking or the loose long-term operation structure item, which will influence the precision of the downstream algorithm module. The sensor hardware fault means that the target hardware parameter of the sensor is greatly different from the preset hardware parameter or exceeds a preset threshold, and the sensor hardware fault may be that the sensor is disconnected in communication due to the sensor's own hardware, connecting wire harness and the like, so that the node cannot normally receive data. The second fault type comprises a data transmission fault comprising at least one of a data frame loss, a data frame drop or data frame error.

In this embodiment, receiving information about fault type of target sensor sent by a demand end comprises at least one of the following cases: in a first case, the sensor comprise an image acquisition apparatus, and a first fault type of the image acquisition apparatus comprises at least one of the followings: an image appearing a puzzle, an image appearing a stripe, an image appearing chromatic aberration, an image appearing a flare, an image appearing a ghost, image exposure abnormality, a lens attached by a foreign body, camera out of focus, camera looseness, or camera powered off; in a second case, the sensors comprise a point cloud acquisition apparatus, and a first fault type of the point cloud acquisition apparatus comprises at least one of the followings: a point cloud having no discrimination, excessive noise points, a point cloud appearing a ghost, a point cloud appearing a mirror image, point cloud points loss, communication interruption, sensor looseness or a sensor surface attached by a foreign body; or in a third case, the sensor comprises an integrated navigation device, and a first fault type of the integrated navigation device comprises at least one of the followings: orientation angle errors, positioning accuracy deviation, communication interruption or sensor looseness.

It should be noted that the target sensors may be combined with the fault types at will, which is not limited to the above three cases. For example, the image acquisition apparatus, the point cloud acquisition apparatus and the integrated navigation device are combined with the second fault type respectively to form a corresponding fault phenomenon, which is not described herein again.

The main fault type of the sensor is classified and listed above. Here, the fault types are illustrated as the random combination and power-down reconnection of the camera hardware and the possible "mirror images" of a high-reflection scene observed by a LiDAR.

For the random combination and power-down reconnection of the camera hardware, the present disclosure provides two-aspect configuration items, the sensor ID and the power-down duration of power-down sensors can be configured, a user can configure the fault type to be generated at a configuration page in the demand end 102 or the computing device 104, an instruction is transmitted to a fault injection module in the computing device, and the fault injection module controls the sensor with the corresponding ID to be on or off in a virtual sensor protocol link according to the instruction.

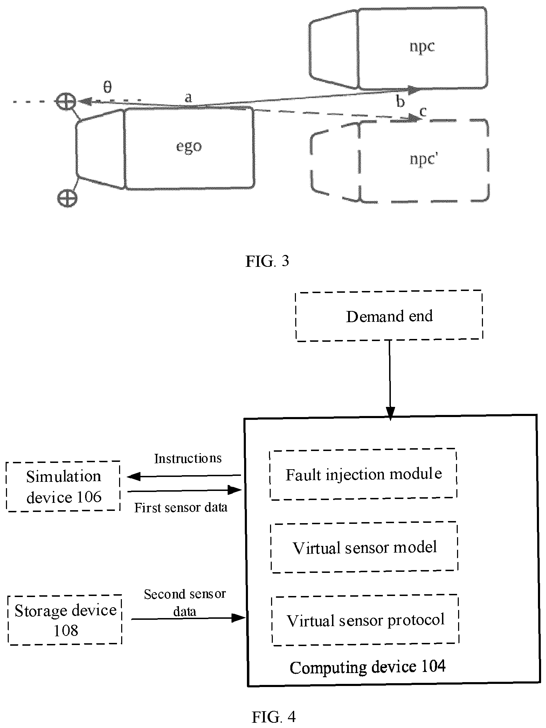

For the possible "mirror images" of a high-reflection scene observed by a LiDAR, since one point in point cloud is essentially the result of one-time effective distance measurement of a laser, and due to the limitation of the characteristics of a sensor itself, the laser traveling path may generate multiple reflections, so that an error distance measurement result is generated from the current azimuth angle, that is, the laser point cloud is generated in the space which may not have an object originally, and is commonly called as "mirror images". With reference to FIG. 3, an ego-vehicle is a virtual vehicle to be tested, each plus sign part is a LiDAR, a npc-vehicle is an environmental vehicle near the ego-vehicle, and a npc'-vehicle is a mirror image vehicle of the npc-vehicle. The ego-vehicle should acquire point cloud data of the npc-vehicle, but because the LiDAR has multiple beams facing multiple directions and the laser traveling path is reflected, part of the data acquired by the ego-vehicle through the LiDAR come from the npc-vehicle and part of the data come from the mirror image vehicle of the npc-vehicle, thereby causing an error result.

The "mirror image" problem has a great influence on the intelligent driving sensing module, and if mishandled, the problems of false detection, missed detection and the like can be caused, and the safety of intelligent driving is seriously influenced. Aiming at this scene, the present disclosure provides the generation probability configuration of "mirror image" point clouds; the demand device 102 or the computing device 104 is configured for configuring the generation probability of the "mirror image" point clouds in a simulation scene, a fault injection module codes mirror image probability information into an sensor model of the LiDAR by modifying a virtual sensor model, and the simulation device generates a "mirror image" problem in a specific simulation scene according to the probability configured. From the intelligent driving system, the acquired point cloud information has no difference with the "mirror image" problem in the real physical world and can represent the "mirror image" point cloud in the real physical world.

By means of the above configuration in the configuration page, in an aspect, the configuration interface of the fault occurrence probability can generate rich scene data without depending on a physical scene, and rich data are provided for the training of the perception model; in another aspect, abundant and configurable test cases are provided, and the testing of generalization capability of the perception model and the robustness of the intelligent system is facilitated.

Step S202: generating an instruction corresponding to the fault type of the target sensor. In other words, the instruction based on the information or the request comprising the fault type of the target sensor is generated.

In the step, the instruction comprise target sensor identifier and fault parameter used for generating the fault type, the fault parameter comprising injection mode of the fault type and a fault occurrence probability. In addition, the fault parameter may further include a fault occurrence duration, and at least one of an internal parameter or an external parameter of the sensor when the fault occurs.

In some embodiments, the injection mode of the fault type comprises at least one of a mode of processing the road test data or a mode of adjusting at least one of an internal parameter or an external parameter of the sensor. The mode of processing the road test data comprises at least one of the followings: a mode of processing image data, a mode of processing point cloud data, and a mode of processing positioning data. The mode of processing image data comprises at least one of the followings: splicing two continuous adjacent frames of images, adding stripes in the images, adjusting the brightness or contrast of the images, adjusting the exposure value of the images, adding light shadow and ghost in the images, blacking out specific parts in the images, shielding the specific parts of the images (simulating that a camera is attached by a foreign body), blurring the images and the like. These methods can correspond to the fault types of the image acquisition device mentioned above. The mode of processing point cloud data comprises at least one of the followings: adjusting the discrimination of the point cloud points, adding a plurality of new noise points, performing mirror image processing on partial point cloud points, deleting partial point cloud points, deleting point cloud points of specific locations (simulating that a LiDAR is attached by a foreign body), or blurring point cloud. The mode of processing positioning data comprises at least one of the followings: modifying the positioning data values (e.g., uniformly increasing the value by one value), setting an abnormal mutation value, generating a fluctuating change in the positioning data, etc.; adjusting internal parameters of the sensors, e.g., adjusting an exposure value, a gain value, a focal length and the like of the camera; adjusting the external parameters of the sensors, e.g., adjusting the transformation matrix between the sensors, adjusting the location and angle between the sensors, etc. These methods can correspond to the fault types of the point cloud acquisition device mentioned above.

The fault occurrence probability represents the probability that the fault should occur in the sensor data, for example, if the occurrence probability is one in ten thousand, it can be considered that the fault occurs once in every ten thousand frames in the sensor data. As to which frame of the ten thousand frames has a fault, the ten thousand frames may be selected randomly or according to a predetermined period, or according to a specific distribution rule such as a regular distribution, Gaussian distribution, or a periodic distribution, which is not limited in the present disclosure. In addition, the method of the present disclosure may also set a fault distribution rule, for example, when a camera is simulated to be blocked, different positions of the camera may be set to be blocked, one camera imaging area is divided into a plurality of areas, and the area which needs to be blocked each time is set according to a specific distribution rule. The fault occurrence duration includes a fault duration, such as sensor power-off duration, duration when an image appears a puzzle, duration when the sensor are attached by foreign body, and the like.

In some embodiments, the fault parameter may further include a fault trigger timing, i.e., under which scene each type of fault is preferably generated, and when the specific scene appears, the corresponding fault occurs with a pre-configured probability. Therefore, the method of the present disclosure can pre-record the physical scenes when various faults occur in the actual road test, and detect the similarity between the simulation scene in the simulation device and the physical scene corresponding to the fault type; when the similarity meets a preset threshold, the fault can be triggered to occur from this moment, and finally, the probability of the fault conforms to the preset fault occurrence probability. The preset threshold may be set as desired by those skilled in the art, and is not limited in the present disclosure.

For example, the jitter fault of the sensors is easy to occur on a bumpy road section, so the method of the present disclosure can detect the road bump degree of the simulation device, and trigger the jitter fault of the sensors when the road bump degree is similar to that in the physical scene, such that the camera will shake according to the pre-configured probability. It should be understood that the similarity between the simulation scene and the physical scene may be set by those skilled in the art as needed, and the present disclosure is not limited thereto. For example, all or part of the scene information is vectorized into vector values, and the similarity between the vector values is compared. Here, different fault types may have different key scene information, e.g., the correlation between the jitter fault of the sensors and the road bump degree, so that such the fault type may be compared with the road bump degree with emphasis.

In addition, the method of the present disclosure can also perform statistical analysis on a plurality of pieces of recorded scene information of the same fault type when the fault type occurs for a plurality of times, and obtain the scene information having the highest possibility when the fault type occurs, wherein the scene information is used as an physical scene corresponding to the fault type and as a reference of fault triggering timing in a simulation platform.

Furthermore, different fault modes of a certain fault type can be realized by setting fault parameter corresponding to the fault type. If the fault type is an image appearing a puzzle, the duration when an image appears a puzzle can be set, for example, an image puzzle lasts for three frames; or, the image puzzle occurrence probability can be set, for example, an image puzzle occurs in every ten thousand frames. The fault parameters for the image appearing a puzzle may further include mosaicking the last m rows of pixels in the previous frame image and the first n rows of pixels in the current frame image, that is, the parameter values of m and n are included. The fault parameters for the sensor jitter include, for example, jitter direction, jitter amplitude, and the like. These parameters may be configured in advance at a demand end, and an appropriate value or value interval may also be automatically generated according to the fault analysis demand. The method of the present disclosure can adaptively configure the parameters required for realizing each fault according to the characteristics of each fault, so that the fault types and the fault parameters can form a mapping relation, and the faults can be realized by determining the fault parameter values.

Step S203: obtaining target sensor data having the fault type on the basis of the instruction. The obtained target sensor data comprises the data when the fault having the fault type occurs and meets the fault occurrence probability.

In some embodiments, step S203 may comprise: sending the instruction to the simulation device, so as to enable the virtual sensor in the simulation device to operate according to the fault parameters in the instruction, and the simulation device to render sensor data from the perspective of the virtual sensor according to the location and attitude of the virtual sensor; and receiving the sensor data transmitted from the simulation device as the target sensor data.

In other embodiments, step S203 may include: acquiring road test data corresponding to the target sensor from a database; and processing the road test data according to the fault parameter in the instruction to obtain the target sensor data.

In still other embodiments, the fault parameter may further include a data source type, the data source type comprising at least one of a database source or a simulation device source. It should be understood that the method of the present disclosure may use the simulation device to generate sensor data having multiple fault types, may also use a road test data processing mode to generate sensor data having multiple fault types, or may combine two fault generation modes. In the present disclosure, the data source corresponding to each fault type may be preset, and when the fault type of the demand end is received, which mode needs to be adopted to generate fault data can be determined.

Therefore, step S203 may further include: determining a data source type corresponding to the fault type, and in response to the data source being a database source, acquiring road test data from the database, and processing the road test data to obtain the target sensor data; and in response to the data source being a simulation device source, acquiring the rendered sensor data from the simulation device as the target sensor data.

In one embodiment, step S203 is described with reference to FIG. 4, which is specifically as follows:
A fault injection module in the computing device generates an instruction on the basis of the fault type of the target sensor sent by the demand end, then the fault injection module sends the instruction to the simulation device, and the simulation device renders first sensor data according to the instruction.

The specific implementation of rendering the first sensor data for the simulation device comprises: the computing device is provided with the virtual sensor model (or the sensor model for short), the computing device can send the virtual sensor model to the simulation device in advance, such that the simulation device renders the first sensor data according to the definition of the virtual sensor model. The sensor model comprises a data rendering mechanism for the sensor by the simulation device. The sensor model further comprises an initial pose (such as an initial pose relative to the virtual sensor), initial internal parameter, initial external parameter of the corresponding sensor, as well as the parameters needed during data acquisition, such as the frame rate of the camera data acquisition, the rotation speed of the LiDAR, etc. The pose includes but is not limited to position and attitude, and the attitude includes but is not limited to yaw angle, pitch angle and roll angle It should be understood that although the virtual sensor may not be displayed in the simulation interface of the simulation device, it can be assumed that the virtual sensor is present at the corresponding location, enables the simulation device to render the current environment data from the perspective of the virtual sensor. The same sensor can share the same sensor model. For example, a plurality of cameras share the same camera model, and a plurality of LiDARs share the same LiDAR model, so that the data processing efficiency is improved; or each sensor is provided with a respective sensor model so as to adapt to data acquisition mechanisms of the same type of sensor and different types of sensors in the market. In the simulation device, the virtual sensor can be associated with a corresponding sensor model, so as to render the data corresponding to the sensor according to the sensor model.

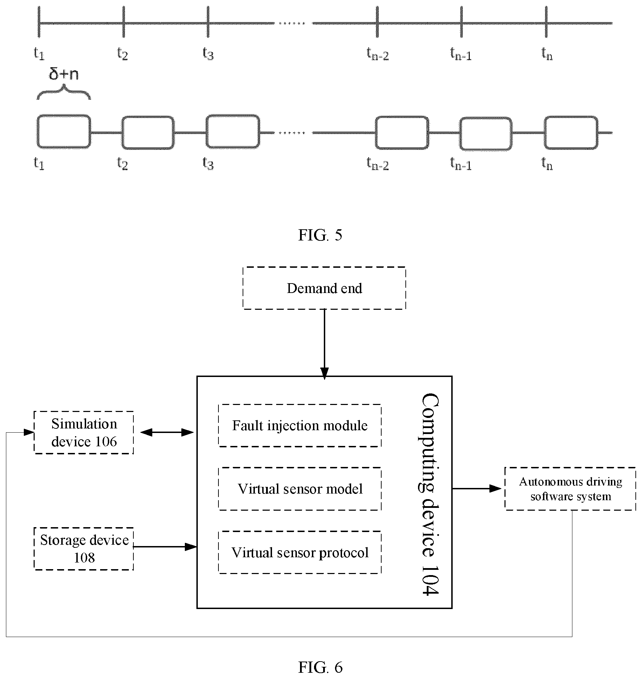

Different from the instantaneous model that acquires instantaneous data at a certain moment of the sensors, the sensor model of the present disclosure can more truly reflect the data acquisition process of the real sensors. In the following, the virtual sensor model in the present application will take the image generated by the camera and the three-dimensional point cloud generated by the LiDAR as examples. Specifically, with reference to FIG. 5, t₁, t₂, ..., tₙ in FIG. 5 represent the starting time of the camera or the LiDAR to start exposure or scanning, and δ+n represents the exposure or scanning time of a frame of data, where δ represents the theoretical time, and n represents the noise term. Considering the exposure time and the rolling shutter characteristics of the rolling shutter camera, and point-by-point scanning ranging for the LiDAR, each frame of image and point cloud data are not data at a certain specific moment, but only the exposure and ranging of one frame of data are completed within a certain time period after the certain specific moment begins, so that if the images and three-dimensional point cloud data at corresponding moments are generated only at the moments t₁, t₂, ..., tₙ, it does not conform to the actual data acquisition mechanism of the sensors.

Furthermore, taking the LiDAR as an example for expansion, no matter the LiDAR is a 360-degree mechanical rotation type LiDAR or a small-FOV galvanometer type LiDAR, the LiDAR has the ranging information of only a limited number of laser heads at the same moment, the orientation of the laser heads is adjusted through mechanical rotation or galvanometer adjustment, new ranging information is obtained, and a point cloud set covering the whole FOV is obtained through accumulation for a period of time. If the ranging information of all the directions is obtained simultaneously to form a frame of point cloud data, it may not match the real scanning process of a Lidar. In a physical scene, the simulated moving body is moving continuously from tᵢ to tᵢ₊₁, then for each point scanned within 6+n, it should be the distance to the environment at the new body location at the corresponding moment (some subdivision between tᵢ to tᵢ₊₁), not all at tᵢ or tᵢ₊₁.

Furthermore, besides the moving body (such as an ego vehicle), other moving objects in the environment also move in real time in the same manner, so the laser point clouds emitted to the moving objects should better follow the above method to perform finer-grained simulation modeling.

Assuming that the simulation modeling is not performed according to the above method, the LiDAR point cloud is expressed as environmental point cloud information at a certain moment, which is very undesirable and does not include motion information of the moving body and other objects in the environment, and the information obtained from the LiDAR point cloud is static in the face of a dynamic scene. Therefore, the motion characteristics of a physical scene need to be considered; namely, the distortion removal processing is performed on sensor information which can be obtained only by sensing the LiDAR and the like for a period of time, and the laser point cloud location information obtained within a period of time is pushed back to a certain specific moment (such as the first acquisition time of each frame data) through a vehicle motion model to obtain a frame of complete point cloud data.

The virtual sensor model in the present application comprises a rendering mechanism of the simulation device for each sensor, and the simulation device can calculate, on the basis of a vehicle motion model and an initial pose of the virtual vehicle or the virtual sensor, poses of the virtual vehicle or the virtual sensor at different moments in a frame acquisition period, and renders environmental data at the different moments based on the sensor model, so as to obtain sensor data of a single frame.

For each frame of data, the rendering mechanism of the sensor model comprises: starting from the first data acquisition time of each frame, predicting the pose of the vehicle at the next moment based on the historical vehicle pose and speed, carrying out a data acquisition corresponding to the sensor at the next moment, and integrating the collected data to the frame data. After that, the steps of vehicle pose prediction, data acquisition, and data addition is repeated until a complete frame of data is obtained. Then, the next frame of data can be rendered. The rendering mechanism of the virtual sensor model is also different for different sensors. Specifically, for the rolling shutter camera, the exposure time of a single-frame image is usually within several milliseconds to ten-odd milliseconds, and in consideration of the continuous motion state of the vehicle, the virtual sensor model is defined as a rolling shutter exposure model related to time, that is, the vehicle pose at a future moment is predicted on the basis of the historical vehicle pose and speed, and a specific image is exposed under a specific vehicle pose corresponding to a specific moment, so that the rolling shutter effect of the rolling shutter camera is subjected to fine modeling. For the LiDAR, a limited number of laser heads are usually matched with a motor to move continuously to observe the whole field angle, and a virtual sensor model is also defined as a LiDAR scanning model related to time, wherein the rendering mechanism of the virtual sensor model is as follows: 1. predicting the vehicle pose at the next moment corresponding to laser ranging on the basis of the historical vehicle pose and the speed; 2. performing primary laser ranging to obtain information such as distance, reflectivity and the like; 3. adding the single-point observation information into the current frame point cloud data; 4. repeating the step 1 until all laser points of the complete frame of point cloud are subjected to ranging simulation, so as to obtain a complete frame of point cloud data.

The whole intelligent driving system is treated as a black box, so that the authenticity of simulation is ensured as much as possible, and the intelligent driving system can run in a real environment and a simulation scene indiscriminately. Therefore, the present application shows the superiority, and compared with the prior art, the simulation modeling is more realistic and accords with the physical model. In addition, the virtual sensor model in the present application can refine the modeling in the rendering mechanism, so that the accuracy of the acquired target sensor data can be improved, and then the effectiveness of simulation on special cases, such as ghost simulation in radar point cloud, and local shielding in snow days, can be effectively improved.

For the convenience of distinguishing, the sensor data rendered by the simulation device may be the first sensor data, and when the instructions sent by the computing device to the simulation device contain a fault parameter, the first sensor data has a corresponding fault type; when the instructions sent by the computing device to the simulation device do not contain the fault parameter, the first sensor data do not have the corresponding fault type. The road test data obtained from the database may be second sensor data, and when the computing device processes the second sensor data according to the fault parameter in the instructions, the obtained data have a corresponding fault type.

In addition, the instructions not only instruct the simulation device communicatively connected to the computing device to generate target sensor data having a first fault type, but also instruct the computing device to generate target sensor data having a second fault type.

Specifically, after the first sensor data are rendered by the simulation device, the first sensor data are sent to the computing device to cause the computing device to generate target sensor data on the basis of the first sensor data instructions. The instructions instruct the computing device to generate target sensor data having a second fault type on the basis of the first sensor data. Specifically, since the first sensor data rendered by the simulation device are sensor data containing a first fault type or sensor data not containing a fault type (normal sensor data without fault), the sensor data containing the first fault type or the sensor data not containing the fault type are subj ected to transmission fault (such as, frame loss and frame drop) processing through an instruction, and then target sensor data having a second fault type are generated.

The computing device is communicatively connected with the data storage device in addition to performing the above processing on the first sensor data sent by the simulation rendering platform so as to generate target sensor data, and acquires second sensor data corresponding to the target sensor from the data storage device, wherein the second sensor data acquired by each sensor during the road test are stored in the data storage device.

After the computing device acquires the second sensor data, the instructions instruct the computing device to generate target sensor data having a second fault type on the basis of the second sensor data, and instruct the computing device to process the second sensor data to obtain target sensor data having a first fault type. Specifically, after the computing device acquires the second sensor data, the computing device performs transmission fault (such as, frame loss and frame drop, i.e., certain frames are specifically set not to be transmitted during the data transmission) processing on the second sensor data through an instruction, so as to generate target sensor data having a second fault type, and performs fault processing on the second sensor data through an instruction, such as splicing and blurring the image data, so as to generate target sensor data having a first fault type.

In addition, after the fault injection module sends the instructions to the simulation device, the simulation device renders the target sensor data according to the instructions. Specifically, since the instructions comprise the fault parameters corresponding to the fault types, the virtual vehicle can directly render the target sensor data through the fault parameters comprised in the received instructions and the acquired sensor data. For example, if the target sensor data to be rendered have the fault of image puzzle, the fault parameter corresponding to the fault of image puzzle can be selected as an image appearing a puzzle in every ten thousand frames, and when the sensor data are acquired by the virtual vehicle, the acquired sensor data are subjected to an image puzzle appearing in every ten thousand frames on the basis of the fault parameter.

In general, in the present disclosure, the sensor data having the fault type can be obtained from the simulation device as the target sensor data; the sensor data can be obtained from the database, and the sensor data are processed on the basis of the data processing mode carried in the instructions, and then corresponding target sensor data are obtained; the first sensor data can also be obtained from the simulation device and/or the second sensor data can be obtained from the database (the first and second sensor data both may be fault data or normal data), and the sensor data can be transmitted to the autonomous driving software system according to the preset data transmission fault probability. After the instruction are configured, no matter it is in the simulation device end or in the computing device end, the corresponding logic is executed according to the instructions.

Furthermore, the instructions generated by the computing device may include a first instruction instructing the simulation device to acquire and render the sensor data and a second instruction instructing the computing device to process and/or transmit the data. When sensor data with faults need to be generated by the simulation device, the first instruction carries fault parameters, and the computing device sends the first instruction to the simulation device, such that the simulation device renders the sensor data having corresponding fault types through the instruction. When the computing device is required to process the road test data, or inject data transmission faults such as data frame loss, data frame drop and data frame error, the second instruction carries fault parameters, and the fault parameters comprise a mode of processing the road test data and/or a data transmission fault probability. Certainly, if the data with faults are not required to be specially generated by the simulation device, the first instruction does not carry the fault parameters, or the fault parameter values are all set to be 0 or all set to be null. If the data transmission fault does not need to be injected by the computing device specially, the second instruction does not carry the data transmission fault parameters, or the fault parameter values are all set to be 0 or all set to be null.

On the basis of the above embodiment, after the computing device generates the target sensor data having a fault type on the basis of the instruction, the target sensor data are transmitted to the autonomous driving software system, so as to enable the autonomous driving software system to generate a traveling strategy on the basis of the target sensor data, and the virtual vehicle in the simulation device to perform fault simulation on the basis of the traveling strategy.

Specifically, with reference to FIG. 6, after the computing device generates the target sensor data, a format of the target sensor data is converted into a format of data acquired by the target sensors during the actual road test through a virtual sensor protocol, and then the format-converted target sensor data are transmitted to the autonomous driving software system, such that the autonomous driving software system generates the traveling strategy on the basis of the format-converted target sensor data. The virtual sensor protocol defines a preprocessing process and a transmission protocol of sensor data, that is, how to process target sensor data (for example, decompression and/or format conversion of the data), and how to send the processed target sensor data to a back-end server.

In addition, considering that the format of the road test data stored in the database is different from the format of the actual sensor data, it is usually a data compression format, therefore, in some embodiments, for an image acquisition device, the format conversion process described above comprises: decompressing the image-compressed data to form image data in a blue-green-red (BGR) format; and converting the image format of the BGR format image data to form Bayer image data corresponding to the image acquisition device as an image data packet meeting an image transmission standard protocol. For a LiDAR, the format conversion process described above comprises: decomposing the point cloud data packet group to form a point cloud data packet corresponding to the LiDAR that meets the user datagram protocol (UDP) and the transmission control protocol (TCP). For a GNSS sensor, the format conversion process described above comprises: decoding the GNSS storage data to form GNSS information data; and coding the GNSS information data to form a GNSS network data packet corresponding to the GNSS sensor as an original GNSS data packet meeting the TCP protocol.

The format of the data is converted into a format of data acquired by a real vehicle sensor, so that the data acquisition and transmission process of a real vehicle can be restored, and the test accuracy of the autonomous driving system is improved. Moreover, the length of the data transmission lines of the computing device and the autonomous driving system may be equal to the length of the lines between the sensors in the real vehicle and the back-end server so as to approximate the data transmission process of the real vehicle as closely as possible.

When the autonomous driving software system generates a traveling strategy on the basis of the format-converted target sensor data, the autonomous driving software system sends the traveling strategy to the simulation device so as to enable the virtual vehicle in the simulation device to perform fault simulation on the basis of the traveling strategy.

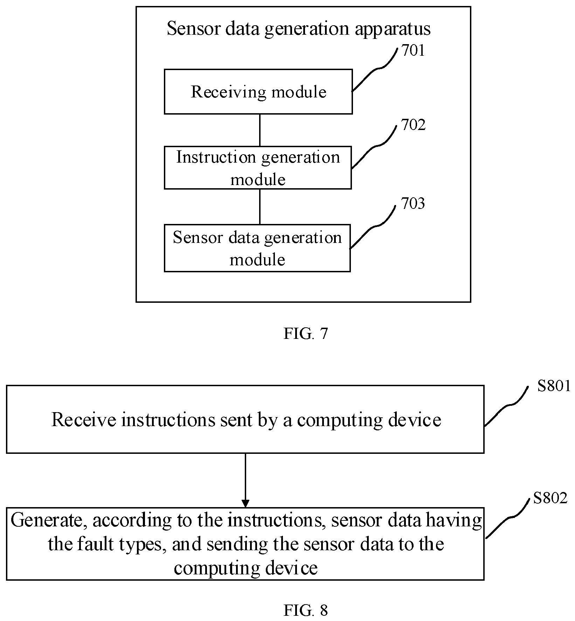

On the basis of the above sensor data generation method, as shown in FIG. 7, the embodiment of the present application further provides a sensor data generation apparatus, comprising:
a receiving module 701, configured for receiving a fault type of a target sensor sent by a demand end;
an instruction generation module 702, configured for generating an instruction corresponding to the fault type of the target sensor, the instruction comprising the fault parameter corresponding to the fault type; and
a sensor data generation module 703, configured for generating target sensor data having the fault type on the basis of the instructions.

As for the sensor data generation apparatus of the present application, it is disclosed in detail in the description based on FIGs. 1 to 6, which is not described herein again.

FIG. 8 shows a sensor data generation method according to another embodiment, which is suitable for execution in the simulation device, the method comprising:
Step S801, receiving an instruction sent by a computing device, wherein the instruction correspond to a fault type of a target sensor and comprise a fault parameter used for generating the fault type, and the fault parameter comprises an injection mode of the fault type, a fault occurrence probability and a fault occurrence duration; and
Step S802, generating, according to the instruction, sensor data having the fault types, and sending the sensor data to the computing device.

FIG. 8 provides an example of rendering the fault data of the sensor on the basis of the simulation device, where the fault type is the first fault type described above; namely, the first instruction carries the fault parameter. Details of step 801 and step 803 are disclosed in detail above and will not be described herein.

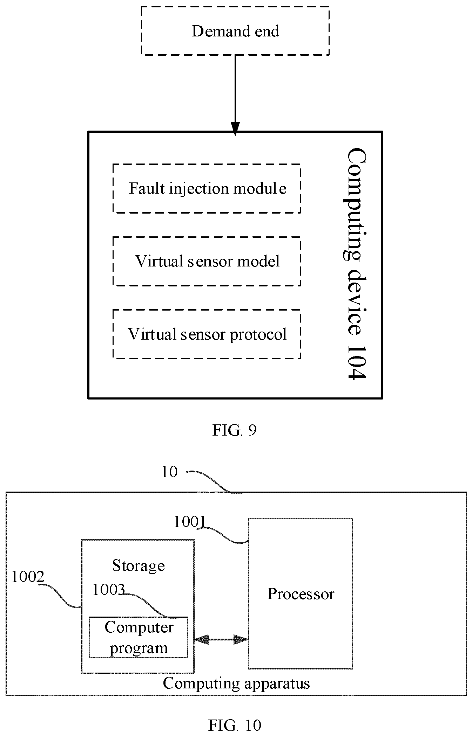

On the basis of the sensor data generation method described above, as shown in FIG. 9, the embodiment of the present application further provides a sensor data generation system, comprising:
a demand end communicatively connected with the computing device and configured for sending information about a fault type of a target sensor to the computing device; and
a computing device, configured for receiving information about the fault type of the target sensor sent by the demand end and generating instructions corresponding to the fault type of the target sensor, the instruction comprising the fault parameter, and the fault parameter comprising injection mode of the fault type and a fault occurrence probability; and obtaining target sensor data having the fault type on the basis of the instructions.

In addition, the system may further comprise the simulation device (not shown in the figure), and the simulation device is configured for receiving the instructions sent by the computing device, generating the sensor data having the fault types on the basis of the instructions, and sending the data to the computing device as the target sensor data.

It should be understood that, the sequence numbers of the steps in the above embodiments do not mean the execution sequence, and the execution sequence of each process should be determined by the functions and the internal logic thereof, and should not constitute any limitation to the implementation process of the embodiments of the present invention.

The following are apparatus embodiments of the present invention, and reference is made to the corresponding method embodiments described above for details which are not described in detail therein.

FIG. 10 is a schematic diagram of a computing apparatus provided in an embodiment of the present invention; the demand end 102, the computing device 104, the data storage device 108 and the simulation device 106 described above may all adopt the structure of the computing apparatus shown in FIG. 10. As shown in FIG. 10, the computing device 10 of this embodiment comprises: a processor 1001, a storage 1002, and a computer program 1003 stored in the storage 1002 and executable on the processor 1001. The processor 1001, when executing the computer program 1003, implements the steps of the sensor data generation method in the respective embodiments described above, such as step S201 to step S203 shown in FIG. 2, and step S801 to step S803 in FIG. 8. Or, the processor 1001, when executing the computer program 1003, implements the functions of the respective modules/units of the sensor data generation apparatus in the respective embodiments described above, such as the functions of the modules/units 71 to 73 shown in FIG. 7.

The present invention further provides a readable storage medium having a computer program stored therein, and the computer program, when executed by a processor, causes the computing device to implement the sensor data generation method according to any embodiment described above.

The readable storage medium may be a computer storage medium or a communication medium. The communication medium includes any medium that facilitates transfer of a computer program from one place to another. The computer storage medium may be any available medium that may be accessed by a general-purpose or special-purpose computer. For example, the readable storage medium is coupled to the processor such that the processor can read information from, and write information to, the readable storage medium. The readable storage medium may also be an integral part of the processor. The processor and the readable storage medium may reside in an application specific integrated circuit (ASIC). In addition, the ASIC may reside in user equipment. The processor and the readable storage medium may also reside as discrete components in a communication device. The readable storage medium may be read-only memory (ROM), random-access memory (RAM), CD-ROM, magnetic tape, floppy disk, optical data storage device, etc.

The present invention further provides a program product comprising an executable instruction stored on a readable storage medium. The at least one processor of the device may read the execution instruction from the readable storage medium, and the execution of the execution instruction by the at least one processor causes the device to implement the sensor data generation method provided in the various embodiments described above.

In the device embodiments described above, it should be understood that the processor may be a central processing unit (CPU), or other general-purpose processor, a digital signal processor (DSP), an application specific integrated circuit (ASIC), etc. The general-purpose processor may be a microprocessor or the processor may be any conventional processor or the like. The steps of the method disclosed in connection with the present invention can be directly embodied as performed by the hardware processor, or performed with a combination of hardware and software modules in the processor.

The above embodiments are only intended to illustrate the technical solutions of the present invention, and not to limit them. Although the present invention is described in detail with reference to the above embodiments, it should be understood by those of ordinary skill in the art that, the technical solutions described in the above embodiments can still be modified, or some technical features can be equivalently replaced. Such modifications and substitutions do not depart from the scope of the embodiments of the present invention, and should fall within the protection scope of the present invention.

## Claims

1. A sensor data generation method, adapted to be executed in a computing device, the method comprising:
receiving information about a fault type of a sensor;
generating an instruction corresponding to the fault type of the sensor, the instruction comprising a fault parameter, and the fault parameter comprising an injection mode of the fault type and a fault occurrence probability; and
generating target sensor data on the basis of the injection mode of the fault type and the fault occurrence probability.

2. The method according to claim 1, wherein the computing device is communicatively connected with a simulation device in which a virtual vehicle is simulated, and generating target sensor data the basis of the injection mode of the fault type and the fault occurrence probability comprises:
sending the instruction to the simulation device so as to enable the simulation device to render sensor data based on the injection mode of the fault type and the fault occurrence probability from the perspective of the sensor in the simulation device; and
receiving the sensor data transmitted by the simulation device as the target sensor data.

3. The method according to claim 1 or 2, wherein the injection mode of the fault type comprises adjusting at least one of internal parameter and external parameter of the sensor in a simulation device.

4. The method according to any one of claims 1-3, wherein the sensor is a virtual sensor in a simulation device, the virtual sensor has same parameter with a physical sensor to represent the physical sensor, the computing device is communicatively connected with a database storing road test data collected by the physical sensor during a road test.

5. The method according to claim 4, wherein the injection mode of the fault type comprises a mode of processing the road test data, and obtaining target sensor data on the basis of the injection mode of the fault type and the fault occurrence probability comprises:
acquiring the road test data of the physical sensor from the database;
processing, according to the injection mode of the fault type and the fault occurrence probability in the instruction, the road test data to obtain the target sensor data.

6. The method according to claim 4 or 5, wherein the database further stores an physical scene when the fault having the fault type occurs during the road test, the method further comprising:
calculating a similarity between a simulation scene in the simulation device and the physical scene; and
triggering, in response to the similarity being greater than or equal to a preset threshold, the fault to start to occur.

7. The method according to any one of claims 4-6, wherein the fault parameter further comprises data source type comprising at least one of a simulation device source and a database source, and obtaining target sensor data on the basis of the injection mode of the fault type and the fault occurrence probability comprises:
sending, in response to the data source type being the simulation device source, the instruction to the simulation device to receive the sensor data from the simulation device as the target sensor data; and
acquiring, in response to the data source types being the database source, the road test data from the database, and processing, according to the instruction, the road test data to obtain the target sensor data.

8. The method according to any one of claims 1-7, wherein
the fault type of a fault comprises at least one of a data quality fault, a sensor location fault, a sensor hardware fault or a data transmission fault;
the data transmission fault comprising at least one of a data frame loss, a data frame drop or data frame error; and
the fault parameter further comprises an occurrence duration of the fault ;
the mode of the injection mode of the fault type comprises at least one of: a mode of processing image data, a mode of processing point cloud data, or a mode of processing positioning data.

9. The method according to any one of claims 1-8,
wherein the sensor comprises an image acquisition apparatus, and the fault type of the image acquisition apparatus comprises at least one of the followings: an image appearing a puzzle, an image appearing a stripe, an image appearing chromatic aberration, an image appearing a flare, an image appearing a ghost, image exposure abnormality, a lens attached by a foreign body, camera out of focus, camera looseness, or camera powered off;
wherein the sensor comprises a point cloud acquisition apparatus, and the fault type of the point cloud acquisition apparatus comprises at least one of the followings: a point cloud having no discrimination, excessive noise points, a point cloud appearing a ghost, a point cloud appearing a mirror image, point cloud points loss, communication interruption, sensor looseness or a sensor surface attached by a foreign body;
wherein the sensor comprises an integrated navigation device, and the fault type of the integrated navigation device comprises at least one of the followings: orientation angle error, positioning accuracy deviation, communication interruption or sensor looseness.

10. The method according to any one of claims 2-9, further comprising:
sending a sensor model of the sensor to the simulation device to enable the simulation device calculates, on the basis of a vehicle motion model, poses of the virtual vehicle at different moments in an acquisition period of the frame, renders environmental data at the different moments based on the sensor model to obtain the sensor data of the frame;
wherein the sensor model comprises a render scheme of the sensor data and an initial pose of the sensor relative to the virtual vehicle.

11. The method according to any one of claims 2-11, further comprising:
transmitting the target sensor data to an autonomous driving software system, so as to enable the autonomous driving software system to generate a traveling strategy on the basis of the target sensor data, and the virtual vehicle in the simulation device to perform fault simulation on the basis of the traveling strategy;
wherein the fault occurrence probability comprises a data transmission fault probability, and transmitting the target sensor data to the autonomous driving software system comprises:
transmitting, according to the data transmission fault probability, the target sensor data to the autonomous driving software system;
wherein transmitting the target sensor data to the autonomous driving software system comprises:
converting a format of the target sensor data into a format of data acquired by the target sensor during a road test; and
transmitting the format-converted data to the autonomous driving software system.

12. A sensor data generation method, adapted to be executed in a simulation device, the method comprising:
receiving an instruction sent by a computing device, wherein the instruction comprises a fault type of a sensor and a fault parameter, and the fault parameter comprises an injection mode of the fault type and a fault occurrence probability;
rendering sensor data according to the injection mode of the fault type and the fault occurrence probability; and
sending the sensor data to the computing device.

13. The method according to claim 12, wherein a virtual vehicle is simulated in the simulation device, the method further comprising:
receiving a sensor model of the sensor, the sensor model comprises a render scheme of the sensor data and an initial pose of the sensor relative to the virtual vehicle;
wherein rendering sensor data according to the injection mode of the fault type and the fault occurrence probability comprises:
predicting poses of the virtual vehicle at different moments in an acquisition period of a frame; and
rendering environmental data at the different moments based on the sensor model, to obtain the sensor data of the frame.

14. A computing device, comprising a storage, and one or more processors communicatively connected with the storage; wherein
the storage stores instructions executable by the one or more processors, and the instructions are executed by the one or more processors to cause the one or more processors to implement a method according to any one of claims 1 to 13.

15. A computer-readable storage medium, comprising programs or instructions, wherein the programs or the instructions, when operated on a computer, implement a method according to any one of claims 1 to 13.
